# EUROPEAN PATENT SPECIFICATION

(11) **EP 2 637 096 B1**
(45) Date of publication and mention of the grant of the patent: **15.02.2017**
(21) Application number: 12290079.8
(22) Date of filing: 07.03.2012
(51) Int. Cl.: G06F 9/48

(54) **A system for schedule and executing best-effort, real-time and high-performance computing (HPC) processes**
System zur Zeitplanung und Ausführung von Best-Effort-Hochleistungs-Rechenverfahren in Echtzeit
Système de planification et d'exécution de processus de calcul haute performance (HPC) d'effort optimal en temps réel

(43) Date of publication of application: 11.09.2013
(73) Proprietor: ALCATEL LUCENT, 92100 Boulogne-Billancourt (FR)
(72) Inventor: Mullender, Sape, 1017 KA Amsterdam (NL); McKie, James, New Providence, New Jersey 07974 (US); Sacha, Jan, 2800 Mechelen (BE); Schild, Henning, 2018 Antwerp (BE); Evans, Noah, 2000 Antwerpen (BE)
(74) Representative: ALU Antw Patent Attorneys

(56) References cited:
- BJÃ ÂRN B BRANDENBURG ET AL: "On the Implementation of Global Real-Time Schedulers", 1 December 2009 (2009-12-01), REAL-TIME SYSTEMS SYMPOSIUM, 2009, RTSS 2009. 30TH IEEE, IEEE, PISCATAWAY, NJ, USA, PAGE(S) 214 - 224, XP031592706, ISBN: 978-0-7695-3875-4 * the whole document *

## Description

### Field of the Invention

The present invention generally relates to scheduling activities on processors, more particularly, the scheduling and execution of best-effort, real-time and high-performance computing (HPC) processes on a multi-core processor. The invention in particular concerns a system for a mixture of best-effort, real-time and HPC processes wherein the overhead for HPC processes is reduced without sacrificing the high frequency needs that real-time processes pose.

### Background of the Invention

Computers have one or more processors for executing applications. Such an application is a software program that must be executed to get a certain job done by the computer. One item of sequential work that forms part of an application is called a process throughout this patent application, which further deals with the scheduling and execution of processes.

Three types of processes are distinguished: real-time processes and high-performance computing processes and best effort processes. The latter are processes that have neither real-time requirements nor high-performance requirements.

A real-time process must be executed before a certain deadline expires. Examples of real-time processes are rendering video frames, controlling a robot, controlling an aircraft, controlling a cellular base station for mobile communications, etc. When a real-time process becomes executable, it must be scheduled immediately or as soon as possible in order to be executed by the deadline. Real-time processes often are recurring. In a video rendering process for instance, a video frame must be processed every 30 milliseconds. Such recurring real-time processes are typically characterized by a period t (i.e. the time interval whereat the process must be repeated), a deadline d (i.e. the point in time by which a single execution of the process must be executed), and a cost c (i.e. the estimated processing time for a single execution of the process). Hence, a recurring process is invoked every t seconds, and may consume up to c seconds of processing time before the deadline d. Real-time processes are characterized as periodic or sporadic, the latter meaning that they have to be executed in response to an event that can occur at unpredictable points in time. A packet inspection process that is executed each time a packet arrives is sporadic. The processor or scheduler cannot predict when a packet will arrive but each time a packet arrives, the packet inspection process must be scheduled for execution within a certain deadline. It is important that a scheduler runs sufficiently frequently to verify if sporadic real-time processes must be scheduled.

A high-performance computing or HPC application is designed to have thousands of parallel HPC processes that are executed by different processors. These processes are designed to do a comparable amount of work and to finish as precisely as possible at the same point in time. Then, a data exchange takes place between the processors executing the processes, and thereafter the next set of parallel processes is dispatched to the processors. HPC processes in other words all start at the same point in time, run in lock step for some period of time, and at a given point in time exchange information in a synchronous fashion. It is important that HPC processes are not interrupted while being executed because if one of them is interrupted and delayed by a few milliseconds, thousands of other processes have to wait the next time the information-exchange takes place, thus causing thousands of milliseconds of delay.

Processors are becoming multi-core processors. Such a multi-core processor is able to execute multiple processes simultaneously. Each core of a multi-core processor can be seen as a separate processor in a multi-processor computer. The distinction between a multi-core processor and a multi-processor computer only lies in the packaging: a multi-core processor is a single IC or integrated circuit whereas multiple processors are implemented in multiple ICs. Whereas multi-processor computers typically had as many as eight processors, multi-core processors are expected to soon have as many as 256 or even 512 cores. Such multi-core processors will no longer function efficiently under control of a single operating system. Instead, a mini operating system will be running on each core. Each core is also expected to have a separate scheduler and a separate clock, i.e. a per-core scheduler with a per-core clock.

Usually, there are more processes to be executed than processor cores. therefore, a processor core has to divide its processing capacity over multiple processes. The widely applied technique to accomplish this is named time-division multiplexing or TDM: the processing time is split in time slices or time slots that are allocated to different processes. The shorter the time slices are, the more accurately processes can be scheduled and the better the impression that each of the processes is executed continuously. Switching from one process to another between subsequent time slices however brings overhead: control must be taken away from the process that is executed, the execution state of that process must be memorized for continued processing during later time slices, and the state of the new process must be loaded from memory. Obviously, the overhead increases when the time slices are made shorter.

In order to allocate different time slices to different processes, a scheduler is foreseen, i.e. a device or function that controls the allocation of the processes that need to be executed to processing cores. The scheduler typically operates in conjunction with a clock. The scheduler informs or programs the clock when a process is allocated to a processing core. The duration of the time interval that is allocated to a process depends on the needs of the process that will be executed, the deadlines of that process and other processes waiting for execution, the fair share of processor resources between the different processes, the degree of interactivity with other processes, etc. The clock generates an interrupt message for the scheduler when the time interval that was allocated to a process has lapsed, enabling the scheduler to regain control of the processor and allocate time slices to a different process. As already mentioned here above, the processor shall save the execution state of the interrupted process such that execution of the process can be resumed later.

It is further worth noticing that processes may be waiting for an event. In such case, they indicate to the operating system that they are waiting for an event to happen. The operating system informs the scheduler such that the scheduler can choose other processes for execution.

The best existing practice for real-time processes consists in invoking a scheduler as soon as a real-time process becomes executable, and relying on the scheduler to make a decision about the time slot(s) wherein the process will be executed. On multi-core processors with a mini operating system per core, the core whereon the event that makes the process executable happened, interrupts the core whereon the process is executed. Alternatively, the schedulers of cores with real-time processes arrange to operate at a frequency sufficiently high to meet the deadline of the process to be executed. The scheduler(s) thereto use interrupts. The overhead resulting from these interrupts becomes unacceptably high when the same technique would be used to also schedule execution of HPC processes.

The best existing practice for HPC processes consists in deactivating scheduling and executing the HPC process thereby using all available processing capacity. The system thus becomes a single-purpose system that does no longer execute real-time processes, but uses all processing capacity for the HPC process with minimum overhead. A drawback thereof is that real-time processes must be executed on a different system.

The best existing practice for general purpose computing enabling execution of HPC processes and other processes (real-time or non-real-time), consists in providing a noise core, i.e. a particular core where all interrupts are sent to, while all other cores can be used for execution of the HPC processes. Real-time processes can still be scheduled on the non-noise cores and the scheduler gets invoked by periodic interrupts from the clock. The clock is the only device whose interrupts are not passed onto the noise core, but directly to the core whose scheduler has to be invoked. Despite the fact the interrupts are sent to the noise core, there will still be an amount of noise caused by the scheduler. This amount of noise remains disruptive for the HPC process.

The article "On the Implementation of Global Real-Time Schedulers" from the authors Björn B. Brandenburg and James H. Anderson, published on 1 December 2009 in the 30th IEEE Real-Time Systems Symposium, pages 214-224, discloses a processing architecture comprising a multi-core processor with per-core scheduler and per-core run queue, an inter-core-interrupt (ICI) handler for handling interprocessor interrupts, and a ready function for event-driven scheduling on cores.

It is an objective of the present invention to disclose a system for scheduling and executing both HPC processes and other processes (real-time or not) on multi-core processors that overcomes the drawbacks of the best existing practices described here above. More particularly, it is an objective to disclose a single system for a mixture of real-time and HPC processes wherein the scheduler overhead is avoided when executing HPC processes without disabling or delaying the execution of real-time processes.

### Summary of the Invention

According to the present invention, the above identified objectives are realized by a system for scheduling and executing best-effort processes, real-time processes and high-performance computing or HPC processes as defined by claim 1, the system comprising:
- a multi-core processor comprising plural cores for executing the best-effort processes, real-time processes and HPC processes;
- a core designated as noise core for handling device generated interrupts;
- for each core in the multi-core processor, a per-core scheduler with a per-core run queue and a per-core clock for interrupt-based scheduling execution of processes on a respective core of the multi-core processor, all per-core schedulers being adapted to be able to deactivate their per-core clock temporarily for execution of an HPC process or best-effort process, and each per-core scheduler being able to reactivate its per-core clock when a process on the core stops execution to wait for an event;
- a ready function adapted to receive from each core notification of an event that causes execution of a process on the core or another core, the ready function being adapted to reactivate the scheduler that has previously deactivated the per-core clock of the core; and
- an inter-core-interrupt handler adapted to receive notification of each core to cause an interrupt on a different core, and adapted to activate a scheduler with deactivated per-core clock of the different core.

Thus, the invention introduces a scheduling system wherein schedulers in particular circumstances may temporarily deactivate their programmable clock altogether, such that no interrupts can be generated temporarily and the processing capacity can be used with minimal overhead for executing an HPC process. A clock that has been deactivated temporarily, can be reactivated by one of three events:
- the process running on the core stops execution to wait for an event;
- the process running on the core activates a second process on that core and thereto calls the ready function; or
- the process running on another core activates a second process on the core via the inter-core-interrupt handler.

In the case of a process stopping execution to wait for an event, the scheduler will be invoked directly by the process. In the case the process activates a second process on the same core, the scheduler will be invoked by the ready function which is called directly or indirectly by the first process as a consequence of creating the second process. In the case where a process running on a different core activates a second process on the core, the other core must interrupt the core and the interrupt routing on that core must invoke the scheduler. This is done through an inter-core interrupt or ICI.

Following an optional aspect of the system according to the present invention, defined by claim 2, the per-core scheduler of each core may be adapted to receive an instruction to execute a process on the core when the core is in idle, low-power state, and may be adapted to reactivate a deactivated per-core clock of the core.

Thus, when there are no executable processes on a core, that core is idle. Such idle core may be waiting for the change of a particular variable. The waiting instruction may bring the core to a low-power state and allow the next instruction to be executed only when the particular variable changes. The next instruction shall then invoke the scheduler.

Further optionally, as defined by claim 3, the per-core scheduler may be adapted to advertise to cores different from its own core state information indicative for the current state of the per-core scheduler, and deadline information indicative for a deadline of a real-time process currently executed by its own core.

Indeed, a scheduler may publish information for use by other cores in making decisions about whether or not to use an inter-core interrupt or whether or not to trigger the memory variable the processor is waiting for. This way, inter-core interrupts are only used when necessary. If for instance a high priority process is running and a low priority process becomes executable, then it is not necessary to use an inter-core interrupt. The scheduler will be invoked by the clock.

Thus, the scheduler on a core tells the other cores what process, if any, it is running and what its deadline is, if any. Moreover, the scheduler, when running the only runnable process on a core, knows that there are no scheduling decisions to be made unless another process comes into existence. It then turns off its clock so the process can use the whole machine uninterruptedly. When another process becomes runnable, that must have been caused by an action on the core itself, i.e. the process asking the ready function, or by an action on another core, i.e. via another core's ready function. These ready functions can restart the scheduler, locally by calling it or remotely through an inter-core interrupt.

According to yet another optional aspect defined by claim 4, the system according to the present invention may further comprise:
- an admission control function adapted to perform an admission test for a real-time process by determining if sufficient processing resources are available in said cores for executing the real-time process.

Indeed, one way to guarantee that deadlines for all real-time processes can be met is to restrict the number of real-time processes so that resources are not over-allocated. Thereto, an admission test may be carried out to make sure that sufficient resources remain available. Further, the real-time processes will be scheduled in a carefully calculated order, possibly allowing a more urgent real-time process to interrupt another one so it can meet its deadline.

### Brief Description of the Drawings

Fig. 1 illustrates an embodiment of the scheduling system according to the present invention;
Fig. 2 illustrates an implementation 200 of the Ready function in the embodiment of the scheduling system if Fig. 1; and
Fig. 3 illustrates an implementation 300 of the Schedule function 121, 123 and 125 in the embodiment of the scheduling system of Fig. 1.

### Detailed Description of Embodiment(s)

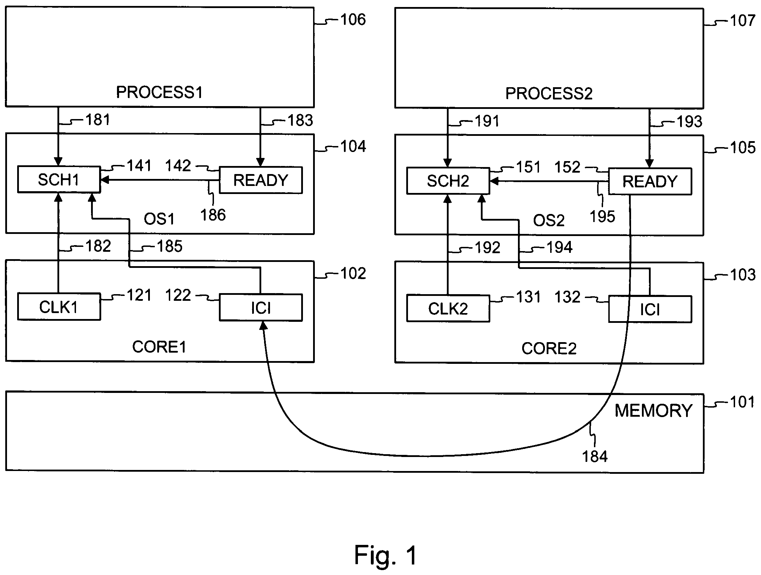

Fig. 1 shows a system with multi-core processor, more particularly two cores 102 and 103 sharing the system's memory 101. Fig. 1 further shows the operating system, OS1 or 104, and the operating system OS2 or 105 running on CORE2 or 103. These operating systems 104 and 105 host a per-core scheduler and a ready function. The per-core scheduler SCH1 or 141 and the ready function 142 form part of the operating system 104 running on the first core 102. Similarly, the per-core scheduler SCH2 and the ready function 152 form part of the operating system 105 running on the second core 103. Above the operating systems 104 and 105, the processes are running. Fig. 1 shows the currently running processes, 106 or PROCESS1 running on the first core 102, and 107 or PROCESS2 running on the second core 103. Each of the schedulers 141 and 151 is accompanied by a run queue, not explicitly drawn in the figure. Each core further has its clock and an inter-core-interrupt handler. In Fig. 1, clock CLK1 or 121 and inter-core-interrupt handler 122 form part of the first core 102. Similarly, clock CLK2 or 131 and inter-core-interrupt handler 132 form part of the second core 103.

In a first example, an HPC process is executed on the system illustrated by Fig. 1. The HPC process is crafted to use the available number of processor cores, i.e. 102 and 103, optimally. As a result, the HPC process tends to execute precisely one sub-process per core. These sub-processes all start at the same time, run synchronously for some period of time and then, again at precisely the same time, exchange information in a synchronous fashion. Thereafter, the cycle repeats. It is important for the performance of the HPC process that sub-processes are not interrupted while they are executed. This allows them to remain synchronized. If an HPC process is scheduled on the system illustrated by Fig. 1, assuming there is precisely one executable sub-process per core, then all schedulers, i.e. 141 and 151, will turn off their respective clocks 121 and 131, and the HPC sub-processes will run completely uninterrupted. If external events cause additional processes to be executed, ICIs will invoke the scheduler(s) 141 and 151. In the first example, it is however assumed that no interruptions happen: there will be no other processes to create or invoke while the HPC process is executed. Consequently, HPC sub-processes will run without being interrupted by either clock or inter-core interrupts.

In a second example, real-time processes, e.g. 106 and 107, are scheduled on the system of Fig. 1. The per-core schedulers 141 and 151 each maintain their own run queue containing runnable processes sorted by their deadline. For best-effort processes, the deadline is set infinity, i.e. a special value that is greater than any deadline. Best-effort processes are thus always prioritized behind real-time processes in the queue. In order to follow the Earliest Deadline First or EDF strategy, each of the schedulers 141 and 151 always selects the process at the head of its run queue for execution.

Indeed, one possible algorithm for allocating real-time processes to a core is the Earliest Deadline First (EDF) algorithm. The real-time process with the earliest occurring deadline is chosen for execution. This implies that, when a process with a distant deadline (or no deadline) is running and a process with an earlier deadline becomes executable, the running process must temporarily be stopped and the new process must be allowed to run. Such events - processes becoming executable, processes reaching their deadline, processes using up their core allocation - are often predictable because real-time processes typically run periodically, dictated by the clock.

Some real-time processes can be designated sporadic which means that they are not periodic but get invoked to react to events that occur at unpredictable times. A process that deals with incoming network packets is an example of such process: the processor cannot predict when the next network packet will arrive, but when it arrives, it must schedule to process the incoming packet within a specified deadline. As a consequence, the per-core scheduler function of schedulers 141 and 151 must either run frequently enough to check whether sporadic processes must be scheduled (which would cause considerable overhead), or the per-core schedulers 141 and 151 must be invoked by arrival of the event that releases the sporadic process. The system according to the present invention, illustrated by Fig. 1, optimizes the second method as follows: the per-core schedulers 141 and 151 publish information about their current status that is used by the ready function 142 and 152 to make an informed decision about whether or not a per-core scheduler should be interrupted. This allows the schedulers 141 and 151 to be much more efficient.

The per-core schedulers 141 and 151 communicate with each other and eventually with processes running on other cores by exchanging messages. Additionally, every per-core scheduler exports two synchronization variables, status and deadline, that can be read by processes running on other cores. Each of these two variables occupies one word in the shared memory 101 that can be read and written atomically. Most existing computer architectures guarantee some form of atomic access to memory words.

The first variable, i.e. the state variable, indicates one of five states the per-core scheduler, e.g. 141, may be in:
- State 1 Scheduling The scheduler 141 is making scheduling decisions.
- State 2 Idle The core 102 is waiting.
- State 3 Only The only executable best-effort process is running.
- State 4 Slice One of plural executable best-effort processes is running.
- State 5 Deadline A real-time process is running.

In the Idle and Only states, the per-core scheduler 141 deactivates its clock 121. In the Slice and Deadline states, the clock 121 is turned on.

A possible scenario is illustrated by the arrow sequence 181-186 and 191-195 in Fig. 1. As is indicated by arrow 181, the first process 106 invokes the first scheduler 141 to wait for an event. The clock 121 on the first core 102 interrupts that first core 102 to run its scheduling function 141. This is indicated by arrow 182. As a result of an EDF decision by the first scheduler 141, process 106 will run on the first core 102. The process 106 then invokes the ready function 142 to start a second process or awaken another process. This is indicated by arrow 183 in Fig. 1. Similarly, as is indicated by arrow 191, the second process 107 invokes the second scheduler 151 to wait for an event. The clock 131 on the second core 103 interrupts that second core 103 to run its scheduling function 151. This is indicated by arrow 192 in Fig. 1. As a result of an EDF decision by the second scheduler 151, process 107 will run on the second core 103. The process 107 then invokes the ready function 152 to start a second process or awaken another process. This is indicated by arrow 193. The ready function 152 on the second core changes the state of the first process 106 to ready and then invokes the scheduler 141 on the first core by means of an inter-core-interrupt 184 to take care of another process. The inter-core-interrupt handler 122 invokes the scheduler 141 as is indicated by arrow 185, to awaken a local process as a result of a request from another core. The ready function 142 thereupon calls the scheduler 141 in order to decide whether to run the current process or the one just made ready. Similarly, the inter-core-interrupt handler 132 may invoke the scheduler 151 as is indicated by arrow 194, to awaken a local process as a result of a request from another core. The scheduler 151 decides whether to run the current process or the one made ready by another core.

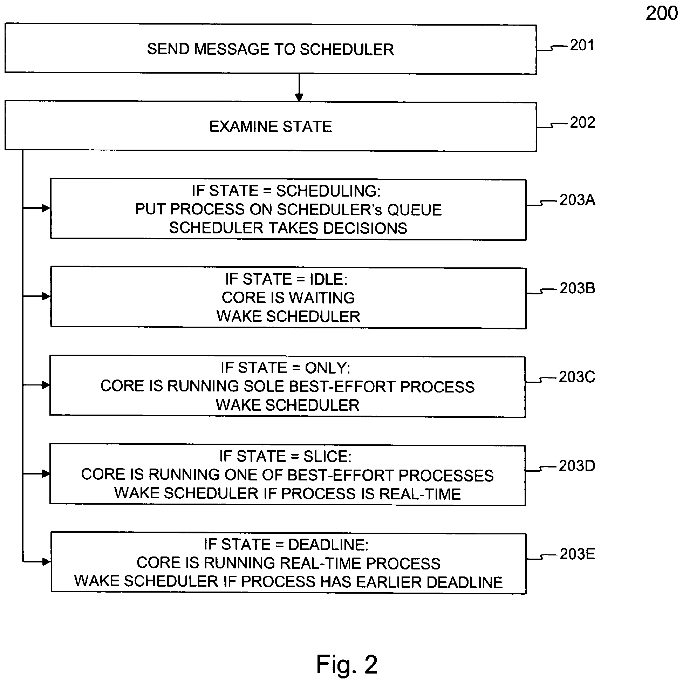

Fig. 2 illustrates implementation of the ready function 200, corresponding to 142 or 152 in Fig. 1, called to put a process on the queue for execution by a core, e.g. 102. In a first step 201, a message is sent by the ready function 200 to the corresponding scheduler 141. In case the ready function is called by a process running on the target core 102, the scheduler 141 can be invoked directly. In case a different core wants to put a process on the queue of core 102, an ICI can be used to invoke scheduler 141. Both scenario's are illustrated by the arrows in Fig. 1. Thereafter, the state variable of scheduler 141 must be examined as is indicated by step 202. In case the state variable is "Scheduling", the ready function 142 puts the process on the scheduler's queue and the scheduler 141 will continue to take scheduling decisions in function of deadlines (priorities) of the processes listed in its queue. This is indicated by step 203A in Fig. 2. In case the state variable is "Idle", the core 102 is waiting and the scheduler 141 must be wakened as is indicated by step 203B. This is also the case when the state variable is "Only" and the core 102 is running the sole best-effort process in its queue, as is indicated by step 203C. In case the state variable is "Slice", core 102 is running one out of a plurality of best-effort processes in its queue. Step 203D specifies that scheduler 141 must be wakened if the new process is a real-time process, i.e. a process with deadline different from infinity. At last, when the state variable is "Deadline", the core 102 is running a real-time process and scheduler 141 must be wakened in case the new process has an earlier deadline, as indicated by step 203E.

The second variable, i.e. the deadline variable, indicates the deadline of the currently executed real-time process. As shown above, this variable is only relevant if the state variable is set to "Deadline". For convenience, the deadline variable is set to Infinity if the state variable is Slice.

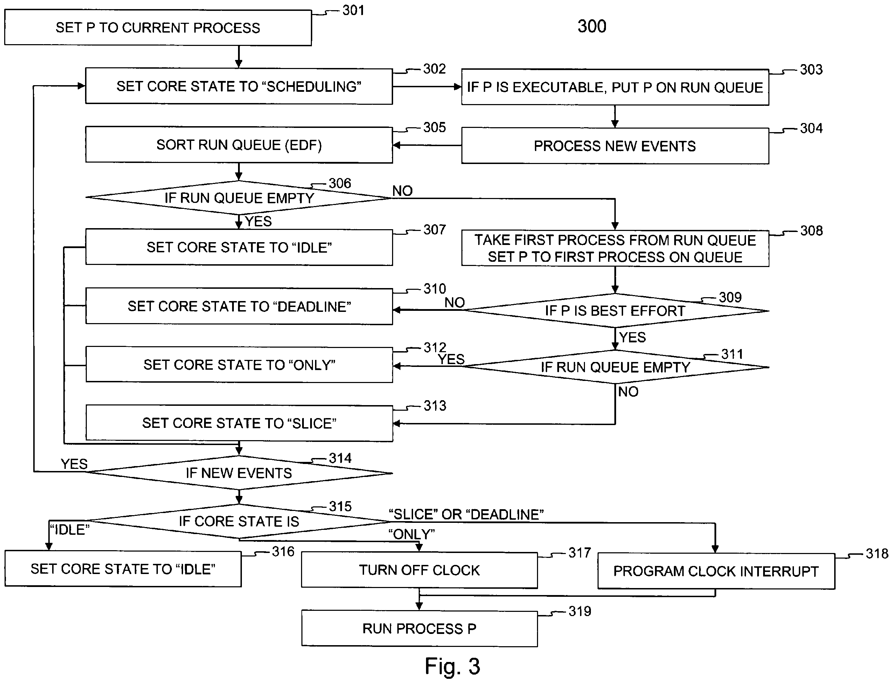

In summary, a new process is put on the run queue of a core, e.g. 102, by calling the ready function 200 whose operation is illustrated by Fig. 2. The ready function 200 sends a message to the core's scheduler 141 and optionally issues an inter-core interrupt for the ICI handler. Such an inter-core interrupt is issued either if the core 102 has disabled its clock interrupt or if the process running on the core 102 has a later deadline (lower priority) than the new process that becomes runnable. That latter condition is necessary to ensure that an Earliest Deadline First process is respected by the scheduler 141. Both the ICI handler 122 and clock interrupt handlers invoke the scheduler 141 by calling a schedule function as illustrated by Fig. 3. This schedule function 300 may also be called explicitly by a running process, in order to yield the core 102 to another process.

Fig. 3 illustrates the process executed by the scheduler 141 when invoked. It is noticed that the schedule function 300 has a loop 302-314 wherein it repeats its decision-making process until there are no more ready notifications that came in while the scheduling decision was being made. It is however expected that the loop is executed just once because it is unlikely that a ready message will arrive in the very short time interval needed to make a scheduling decision.

The scheduler 141 starts running when it is invoked. It sets a parameter P to the current process as is indicated by step 301. The state variable is set "Scheduling" as is indicated by step 302. No interruptions are needed now because the scheduler 141 will process its queue of pending scheduler events. If there is a current process P and this process is still executable when the scheduler 141 is invoked, the scheduler 141 will put the current process P back on the run queue to be continued continued later. This is indicated by step 303. The scheduler now starts processing new events, i.e. the pending messages from ready calls, in step 304. Thereto, the scheduler 141 sorts the run queue in step 305, e.g. applying the EDF algorithm. In case there is no process to run, i.e. the run queue is found empty in step 306, the state variable is set "Idle" in step 307. In case the queue contains a process in step 306, the variable P is set to the first process in the sorted run queue in step 308. In step 309 it is checked whether the process P is a best effort process. If this is not the case, i.e. when its deadline differs from Infinity, the state variable is set "Deadline" as is indicated by step 310. Otherwise, if the process P is a best-effort process,it is checked in step 311 if the run queue has become empty by taking process P from the run queue. In case the run queue is not empty, the state variable is set "Slice" as indicated by step 313. If there are no other processes in the queue, the state variable is set "Only" as is indicated by step 312 The scheduling function 300 leaves the loop 302-314 when there are no race conditions and the decisions of the scheduler 141 are executed on core 102. In case the core state is "Idle" in step 315, nothing is changed in step 316. In case the core state is "Only", the clock 121 is turned off in step 317 because there is no foreseeable necessity for making scheduling decisions, and the process P is run. In case the core state is "SLICE" or "DEADLINE", the clock 121 is programmed to allocate a time slice to the current process P and to generate an interrupt thereafter. This is done in step 318. The current process P is run thereafter.

The state and deadline variables are set and the scheduler 141 will be awakened early if external events require so..

Although the present invention has been illustrated by reference to specific embodiments, it will be apparent to those skilled in the art that the invention is not limited to the details of the foregoing illustrative embodiments, and that the present invention may be embodied with various changes and modifications. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions.

## Claims

1. A system for scheduling and executing best-effort processes, real-time processes and high-performance computing or HPC processes (106, 107), said system comprising:
- a multi-core processor comprising plural cores (102, 103) for executing said best-effort processes, real-time processes and HPC processes (106, 107);
- a core designated as noise core for handling device generated interrupts;
- for each core (102, 103) in said multi-core processor, a per-core scheduler (141, 151) with a per-core run queue and a per-core clock (121, 131) for interrupt-based scheduling execution of processes (106, 107) on a respective core (102, 103) of said multi-core processor, all per-core schedulers (141, 151) being adapted to be able to deactivate their per-core clock (121, 131) temporarily for execution of an HPC process or best-effort process, and each per-core scheduler (141, 151) being able to reactivate its per-core clock (121, 131) when a process executed on said core (141, 151) stops execution to wait for an event;
- a ready function (142, 152) adapted to receive from a core (102, 103) notification of an event that causes execution of a process on said core (102, 103) or another core (103, 102), said ready function (142, 152) being adapted to reactivate the scheduler (141, 151) that has previously deactivated the per-core clock (121, 131) of said core (102, 103); and
- an inter-core-interrupt handler (122, 132) adapted to receive notification of a core (102, 103) to cause an interrupt on a different core (103, 102), said inter-core interrupt handler (122, 132) being adapted to activate a scheduler (141, 151) with a deactivated per-core clock (121, 131) of said different core (103,102).

2. A system according to claim 1, wherein said per-core scheduler (141, 151) of each core (102, 103) is adapted to receive an instruction to execute a process on said core (102, 103) when said core (102, 103) is in idle, low-power state, and is adapted to then reactivate a deactivated per-core clock (121, 131) of said core (102, 103).

3. A system according to claim 1, wherein said per-core scheduler (141, 151) of each core (102, 103) is adapted to advertise to cores (102, 103) different from its own core (102, 103) state information indicative for a current state of said per-core scheduler (141, 151), and deadline information indicative for a deadline of a real-time process currently executed by its own core (102, 103).

4. A system according to claim 1, further comprising:
- an admission control function adapted to perform an admission test for a real-time process by determining if sufficient processing resources are available in said cores (102, 103) for executing said real-time process).

## Patentansprüche

1. System für die Planung und Ausführung von Best-Effort-Prozessen, Echtzeitprozessen und Hochleistungsrechenprozessen (High-Performance Computing, HPC; 106, 107), wobei besagtes System umfasst:
- einen Mehrkernprozessor, der mehrere Kerne (102, 103) für das Ausführen besagter Best-Effort-Prozesse, Echtzeitprozesse und HPC-Prozesse (106, 107) umfasst;
- einen als Noise-Core ausgewiesenen Kern für die Behandlung vom Gerät verursachter Interrupts;
- für jeden Kern (102, 103) in besagtem Mehrkernprozessor einen Per-Core-Scheduler (141, 151) mit einem Per-Core-Run-Queue und einem Per-Core-Dock (121, 131) für ein interrupt-basiertes Scheduling der Prozessausführung (106, 107) auf einem entsprechenden Kern (102, 103) besagten Mehrkernprozessors, wobei alle Per-Core-Scheduler (141, 151) dafür ausgelegt sind, um ihr Per-Core-Dock (121, 131) vorübergehend für die Ausführung eines HPC-Prozesses oder Best-Effort-Prozesses deaktivieren zu können, und wobei jeder Per-Core-Scheduler (141, 151) sein Per-Core-Dock (121, 131) reaktivieren kann, wenn die Ausführung eines auf besagtem Kern (102, 103) ausgeführten Prozesses stoppt, um auf ein Ereignis zu warten;
- eine Ready-Funktion (142, 152), dafür ausgelegt, um von einem Kern (102, 103) die Benachrichtigung von einem Ereignis zu empfangen, welches die Ausführung eines Prozesses auf besagtem Kern (102, 103) oder auf einem anderen Kern (103, 102) verursacht, wobei besagte Ready-Funktion (142, 152) dafür ausgelegt ist, um den Scheduler (141, 151) zu reaktivieren, der zuvor das Per-Core-Dock (121, 131) besagten Kerns (102, 103) deaktiviert hatte; und
- einen Intercore-Interrupt-Handler (122, 132), ausgelegt für den Empfang einer Benachrichtigung von einem Kern (102, 103) zum Bewirken eines Interrupts auf einem anderen Kern (103, 102), wobei besagter Intercore-Interrupt-Handler (122, 132) ausgelegt ist für das Aktivieren eines Schedulers (141, 151) mit deaktiviertem Per-Core-Dock (121, 131) besagten anderen Kerns (103, 102).

2. System nach Anspruch 1, wobei besagter Per-Core-Scheduler (141, 151) eines jeden Kerns (102, 103) ausgelegt ist für den Empfang einer Anweisung zur Ausführung eines Prozesses auf besagtem Kern (102, 103), wenn besagter Kern (102, 103) im Ruhezustand/Niedrigleistungszustand (Idle, Low-power) ist, und wobei er weiterhin dafür ausgelegt ist, um dann ein deaktiviertes Per-Core-Dock (121, 131) besagten Kerns (102, 103) zu reaktivieren.

3. System nach Anspruch 1, wobei besagter Per-Core-Scheduler (141, 151) eines jeden Kerns (102, 103) dafür ausgelegt ist, um anderen Kernen (102, 103) als dem eigenen Kern (102, 103) Statusinformationen zu einem gegenwärtigen Status besagten Per-Core-Schedulers (141, 151) und Deadline-Informationen zur Angabe einer Frist eines Echtzeit-Prozesses mitzuteilen, der gegenwärtig von seinem eigenen Kern (102, 103) ausgeführt wird.

4. System nach Anspruch 1, weiterhin umfassend:
- eine Zulassungssteuerungsfunktion, die dafür ausgelegt ist, um einen Zulassungstest für einen Echtzeitprozess auszuführen, bei dem bestimmt wird, ob in besagten Kernen (102, 103) ausreichende Verarbeitungsressourcen für das Ausführen besagten Echtzeit-Prozesses verfügbar sind.

## Revendications

1. Système de planification et d'exécution de processus de meilleur délai, de processus en temps réel et de processus de calcul à haute performance ou HPC (106, 107), ledit système comprenant :
- un processeur multicoeur comprenant plusieurs coeurs (102, 103) pour exécuter lesdits processus de meilleur délai, processus en temps réel et processus HPC (106, 107) ;
- un coeur appelé coeur de bruit pour gérer des interruptions générées par un dispositif ;
- pour chaque coeur (102, 103) dans ledit processeur multicoeur, un planificateur par coeur (141, 151) avec une fille d'attente d'exécution par coeur et une horloge par coeur (121, 131) pour l'exécution de planification basée sur une interruption des processus (106, 107) sur un coeur respectif (102, 103) dudit processeur multicoeur, tous les planificateurs par coeur (141, 151) étant adaptés pour pouvoir désactiver leur horloge par coeur (121, 131) temporairement pour exécuter un processus HPC ou un processus de meilleur délai, et chaque planificateur par coeur (141, 151) pouvant réactiver son horloge par coeur (121, 131) lorsqu'un processus exécuté sur ledit coeur (141, 151) arrête l'exécution pour attendre un événement ;
- une fonction prête (142, 152) adaptée pour recevoir à partir d'un coeur (102, 103) une notification d'un évènement qui entraîne l'exécution d'un processus sur ledit coeur (102, 103) ou un autre coeur (103, 102), ladite fonction prête (142, 152) étant adaptée pour réactiver le planificateur (141, 151) qui a précédemment désactivé l'horloge par coeur (121, 131) dudit coeur (102, 103) ; et
- un gestionnaire d'interruption entre coeurs (122, 132) adapté pour recevoir une notification d'un coeur (102, 103) pour entraîner une interruption sur un coeur différent (103, 102), ledit gestionnaire d'interruption entre coeurs (122, 132) étant adapté pour activer un planificateur (141, 151) avec une horloge par coeur (121, 131) désactivée dudit coeur différent (103, 102).

2. Système selon la revendication 1, dans lequel ledit planificateur par coeur (141, 151) de chaque coeur (102, 103) est adapté pour recevoir une instruction pour exécuter un processus sur ledit coeur (102, 103) lorsque ledit coeur (102, 103) est en état inactif à faible puissance et est adapté pour réactiver ensuite une horloge par coeur (121, 131) désactivée dudit coeur (102, 103).

3. Système selon la revendication 1, dans lequel ledit planificateur par coeur (141, 151) de chaque coeur (102, 103) est adapté pour annoncer aux coeurs (102, 103) différents de son propre coeur (102, 103) des informations d'état indiquant un état actuel dudit planificateur par coeur (141, 151) et des informations de date limite indiquant une date limite d'un processus en temps réel exécuté actuellement par son propre coeur (102, 103).

4. Système selon la revendication 1, comprenant en outre :
- une fonction de contrôle d'admission adaptée pour exécuter un test d'admission pour un processus en temps réel en déterminant si des ressources de traitement suffisantes sont disponibles dans lesdits coeurs (102, 103) pour exécuter ledit processus en temps réel.
